Europäisches Patentamt

European Patent Office

Office européen des brevets

(11) Veröffentlichungsnummer: **0 244 689**
**A2**

(12) **EUROPÄISCHE PATENTANMELDUNG**

(21) Anmeldenummer: 87105789.9

(22) Anmeldetag: 18.04.87

(51) Int. Cl.⁴: **C04B 35/52**

(30) Priorität: 25.04.86 DE 3614111

(43) Veröffentlichungstag der Anmeldung:
**11.11.87 Patentblatt 87/46**

(84) Benannte Vertragsstaaten:
**BE DE FR GB IT**

(71) Anmelder: **HOECHST AKTIENGESELLSCHAFT**
**Postfach 80 03 20**
**D-6230 Frankfurt am Main 80(DE)**

(72) Erfinder: **Hahn, Hans**
**Provinzialstrasse 32**
**D-5411 Urbar(DE)**
Erfinder: **Ernst, Josef**
**Waldstrasse 20**
**D-6239 Eppstein/Taunus(DE)**

(54) Homogene Kohlenstoff-Steine und Verfahren zu ihrer Herstellung.

㊿ Zur Herstellung von Kohlenstoff-Steinen vermischt man Koks-Pulver, gegebenenfalls zusammen mit Graphit und Ruß, mit einem organischen Bindemittel und einem sauren Härter für das Bindemittel. Man gibt das Gemisch in eine Form, verdichtet es durch Druck und läßt es aushärten. Das organische Bindemittel ist ein Phenol-Formaldehyd-Harz und/oder ein Furan-Formaldehyd-Harz.

EP 0 244 689 A2

## Homogene Kohlenstoff-Steine und Verfahren zu ihrer Herstellung

Die vorliegende Erfindung betrifft homogene Kohlenstoff-Steine mit einem Gehalt an elementarem Kohlenstoff von 70 bis 90 Gew.-%, die ein ausgehärtetes organisches Bindemittel enthalten, sowie ein Verfahren zu ihrer Herstellung.

Für den Säureschutzbau werden häufig säurefeste keramische Steine und Platten verwendet. In Spezialfällen, z.B. bei Belastung durch Flußsäure oder starkem Alkaliangriff, werden Kohlenstoff-Steine, insbesondere Kohlenstoff-Platten, benötigt.

Zur Herstellung der handelsüblichen Kohlenstoff-Steine werden Graphit-und Koksmehle mit Teermaterialien gemischt, im Formblöcke verpreßt und auf Temperaturen über 500°C erhitzt. Nach dem Abkühlen werden (die Blöcke, falls erforderlich), in Stücke gewünschter Größe zerschnitten. Das Schneiden der hergestellten Kohlenstoffkörper ist zeit-und energieaufwendig; ferner erfordert das Brennen Sicherheitsmaßnahmen, da größere Mengen von polykondensierten aromatischen Verbindungen frei werden. Die so enthaltenen Formkörper weisen einen sehr hohen Gehalt an elementarem Kohlenstoff auf. Sie sind zwar gegen Chemikalien beständig, aber porös. Es ist daher erforderlich, sie oberflächlich mit einem Kunstharz zu imprägnieren. Dieses Verfahren wird beispielsweise beschrieben in "Technische Mitteilungen", Heft 6,62. Jahrgang (1969), Seite 226, Vulkan-Verlag, Essen.

Man hat ferner bereits Koksmehle mit Schwefelsäure und Furfural vermischt und das Gemisch auf ca. 330°C erhitzt, um feste Gegenstände, beispielsweise Scheiben, aus imprägniertem Kohlenstoff herzustellen (GB-PS 647 440). Hierbei war jedoch die Verwendung von Schwefelsäure von Nachteil.

Es bestand daher die Aufgabe, ein Verfahren zur Herstellung von Kohlenstoff-Steinen anzugeben, bei dem nur geringe Harzmengen verwendet werden, der eingesetzte Härter fest ist und die Chemikalienbeständigkeit des erhaltenen Produkts verbessert ist.

Es wurde nun ein Verfahren zur Herstellung von Kohlenstoff-Steinen gefunden, bei dem man Koks-Pulver, gegebenenfalls zusammen mit Graphit und Ruß, ein organisches Bindemittel und einen sauren Härter für das Bindemittel vermischt, das Gemisch in eine Form gibt, durch Druck verdichtet und aushärten läßt. Dieses Verfahren ist dadurch gekennzeichnet, daß das Bindemittel ein Phenol-Formaldehyd-Harz und/oder ein Furan-Formaldehyd-Harz ist.

Die einsetzbaren sauren Härterverbindungen sind dem Fachmann bekannt. Als Härter werden saure Sulfate (z.B. Natriumbisulfat), Alkylsulfonsäuren, daneben auch Schwefelsäure in adsorbierter Form, z. B. an Aktivkohle adsorbiert, insbesondere aber Arylsulfonsäuren verwendet. Als Härter geeignet sind auch Amidosulfonsäure, Phosphorsäure und Dihydrogenphosphate. An Stelle der freien Arylsulfonsäuren lassen sich auch die entsprechenden Sulfochloride, die Harnstoffaddukte oder Hydrazin-Salze der entsprechenden Säuren verwenden.

Die ausgeformten Steine härten auch ohne zusätzliches Erwärmen aus. Die Endhärte wird jedoch wesentlich schneller erreicht, wenn man bei erhöhter Temperatur, vorzugsweise zwischen 20 und 120°C, insbesondere bei 20 bis 80°C nachbehandelt. Die Dauer der Nachbehandlung kann 0,5 bis 48 Stunden, vorzugsweise 1 bis 24 Stunden betragen. Der eingesetzte elementare Kohlenstoff soll Korngrößen zwischen 0,1 bis 4 mm, vorzugsweise zwischen 0,05 bis 3 mm enthalten. Eine enge Korngrößenfraktion ist nachteilig. Es ist vorteilhaft, eine Mischung aus Koks und Graphit unter Zusatz von Ruß herzustellen. Mindestens 20 Gew.-% des einge setzten Kohlenstoff-Pulvers sollen kleiner sein als 20 Mikron.

Für je 100 g Phenolharz oder Furanharz werden 20 bis 30 g des Härters verwendet. Das Volumen der festen Bestandteile (saure Verbindung, Kohlenstoff-Pulver) zum Volumen der eingesetzten Harze beträgt ca. 1:0,1 bis 1:0,2. Es ist vorteilhaft, wenn dieses Verhältnis so bemessen wird, daß eine pulverförmige Mischung erhalten wird. Auf diese Weise wird ein zu hoher Kunstharzgehalt vermieden, der später am Stein zu Schrumpfungen Anlaß gibt. Hierfür haben sich insbesondere folgende Mengenverhältnisse bewährt: 94-99 Gew.-Teile Kohlenstoffmischung, 1-6 Gew.-Teile Härtermischung und 10-15 Gew.-Teile Harzlösung. Die erdfeuchte Mischung wird in handelsüblichen Pressen z.B. Kniehebelpressen, wie sie in der keramischen Industrie üblich sind, eingegeben, wobei sowohl maschinell als auch von Hand füllbare Formen möglich sind.

Der Druck bei der Verdichtung soll mindestens 10 kg/cm² betragen. Bevorzugt sind Drucke von 100 bis 10000, insbesondere 300 bis 7000 kg/cm².

Sofern man zunächst nur Koks, und/oder Graphit, gegebenenfalls unter Zusatz von Ruß sowie saure Härter vermischt, soll die hergestellte Mischung freifließend und feinpulvrig anfallen. Das zu dieser Mischung gegebene Phenol-oder Furanharz soll eine Viskositätsbereich zwischen 50 und 2000, vorzugsweise zwischen 200 und 1000 mPa•s aufweisen. Harze mit höheren Viskositätswerten können durch Verdünnen mit Furfurylalkohol, Furfural, Methanol, Ethanol und/oder Aceton auf diese Werte eingestellt werden.

Nach dem erfindungsgemäßen Verfahren lassen sich homogene Kohlenstoff-Steine herstellen, die elementaren Kohlenstoff in Mengen von 70 bis 90 Gew.-% aufweisen und einen sauren Härter sowie ein ausgehärtetes Bindemittel auf Basis von Phenol-Formaldehyd-Harz und/oder Furan-Formaldehyd-Harz aufweisen. Bei Einsatz von sauren Härtern auf Basis von Bisulfat oder Sulfonsäuren enthält der fertige Kohlenstoff-Stein Schwefelmengen, die einem analytisch bestimmbaren Sulfatgehalt von 0,1 bis 60 mg/g Steinmaterial entsprechen.

Die Abmessungen der hergestellten Seine sind nur durch die Dimension der verfügbaren Pressen begrenzt. Übliche Normsteine besitzen die Abmessungen 240 x 115 x 20 mm oder 240 x 118 x 80 mm. Die Dichte der Kohlenstoff-Steine beträgt zwischen 1,4 bis 1,7, vorzugsweise 1,5 bis 1,6 g/cm³. Durch Erhöhen des Preßdrucks läßt sich die Dichte der Kohlenstoff-Steine erhöhen und die Porösität verringern.

Es ist ein Vorteil des erfindungsgemäßen Verfahrens, daß die erhaltenen Kohlenstoff-Steine ohne größeren Abfall hergestellt werden können. Durch Einstellen einer hohen Porösität lassen sich Steine mit einer hohen Temperaturwechselbeständigkeit erhalten. Dies ist für Reaktionsgefäße von Bedeutung, in denen in kurzer Zeit hohe Reaktionswärmen frei werden. Die erfindungsgemäß hergestellten Steine besitzen eine gute chemische Beständigkeit und eignen sich daher für Säureschutzbauten. Im Gegensatz zu imprägnierten Kohlenstoff-Steinen weisen die erfindungsgemäßen Kohlenstoff-Steine eine homogene Struktur auf.

Die Erfindung wird durch das Beispiel näher erläutert.

Beispiel

13 Gewichtsteile eines Furan-Formaldehydharzes (DE-PS 2926053, Beispiel 4a) wurden mit 50 Gew.-Teilen Koksmehl (0,4-3 mm) und 50 Gewichtsteilen eines Härter enthaltenden Kittmehles (DE-PS 2926053, Beispiel 2b) gründlich vermischt. Das Kohlenstoffpulver des Kittmehls bestand aus Ruß, Koks (0,3 - 3,3 mm) und graphit (max. 0,5 mm). 2,3 kg dieser Mischung wurden in eine rechteckige Form (24 x 11,4 cm) eingefüllt. Durch eine Kniehebelpresse wurde ein Druck von 950 kg/cm² aufgebracht, der Stein der Form entnommen und 16 Stunden bei 80°C gelagert.

Der Stein wies folgende Eigenschaften auf:
Gewicht des gepreßten Steines 1,83 kg
Gewicht nach Ofenlagerung 1,70 kg
Raumgewicht 1,5 g/cm³
Wasseraufname 7,2 %
offene Porosität 11,7 %
Biegezugfestigkeit an Prismen (4 x 4 x 16 cm) 14 N•mm$^{-2}$
Druckfestigkeit an Würfeln (4 x 4 x 4 cm) 68 N•mm$^{-2}$
Druckfestigkeit nach 24 h, 200° 64 N•mm$^{-2}$

## Ansprüche

1. Verfahren zur Herstellung von Kohlenstoff-Steinen, bei dem man Koks-Pulver, gegebenenfalls zusammen mit Graphit und Ruß mit einem organischen Bindemittel und einem sauren Härter für das Bindemittel vermischt, in eine Form gibt und durch Druck verdichtet und aushärten läßt, dadurch gekennzeichnet, daß das organische Bindemittel ein Phenol-Formaldehyd-Harz und/oder ein Furan-Formaldehyd-Harz ist.

2. Homogene Kohlenstoff-Steine mit einem Gehalt an elementarem Kohlenstoff von ca. 70 bis 90 Gew.-%, enthaltend einen sauren Härter und ein Bindemittel, dadurch gekennzeichnet, daß sie als Bindemittel ein gehärtetes Phenol-Formaldehyd-Harz und/oder Furan-Formaldehyd-Harz enthalten.